Europäisches Patentamt

European Patent Office

Office européen des brevets

(11) Publication number: **0 209 617 B1**

# EUROPEAN PATENT SPECIFICATION

(45) Date of publication of patent specification: **29.01.92**   (51) Int. Cl.⁵: **H02K 13/10**, H01R 39/48

(21) Application number: **85109373.2**

(22) Date of filing: **25.07.85**

(54) **Small-size motor.**

(43) Date of publication of application:
**28.01.87 Bulletin  87/05**

(45) Publication of the grant of the patent:
**29.01.92 Bulletin  92/05**

(84) Designated Contracting States:
**DE FR GB NL**

(56) References cited:
**DE-A- 1 613 332**
**GB-A- 2 005 483**
**GB-A- 2 052 880**
**US-A- 2 703 372**

(73) Proprietor: **MATSUSHITA ELECTRIC INDUSTRI-AL CO., LTD.**
**1006, Oaza Kadoma**
**Kadoma-shi, Osaka-fu, 571(JP)**

(72) Inventor: **Uda, Shigenori**
**1-36-7, Hannan-cho Abeno-ku**
**Osaka-shi Osaka-fu(JP)**
Inventor: **Takao, Hiroshi**
**496-5, Nishifukuhara**
**Yonago-shi Tottori-ken(JP)**
Inventor: **Kondo, Shigeru**
**3-27-4, Kanaoka**
**Higashiosaka-shi Osaka-fu(JP)**

(74) Representative: **Eisenführ, Speiser & Strasse**
**Martinistrasse 24**
**W-2800 Bremen 1(DE)**

Rank Xerox (UK) Business Services

## Description

The present invention relates to a small-size motor of a type comprising brushes and a commutator slidably engaged with the brushes, as used in tape recorders, video tape recorders and the like, a vapourized organic compound being provided in the motor interior.

Such a small-size motor is known e.g. from DE-A-1 613 332.

From GB-A-2 005 483 there is also known a current collecting system selectively using compatible materials in different applications for the moving and stationary contact members operating in an inert gas atmosphere, such as carbon dioxide containing a vaporous organic substance.

Further, from US-B-2,703,372 there is known means for minimizing wear between a current collector device and an engaging contact member in electrical machines.

In case of a small-size motor in which make and break of contact most frequently occur, two kinds of brushes are typically used. One of them comprises a sheet or a wire rod of an electrically conductive resilient material (e.g., copper, beryllium-copper alloy, copper-titanium alloy, phosphor bronze and nickel silver) which is cladded with or partially spot welded by a noble metal or its alloy (e.g., gold, palladium, platinum, silver and copper or their alloys). The other comprises the above sheet or wire rod a part of which is provided with a brush element made of sintered carbon (e.g., carbon, Ag-carbon, Cu-carbon, AgCu-carbon, which optionally contain an additive such as SiC, $MoS_2$, Pb and an epoxy resin) by means of an electrically conductive adhesive, spot welding or calking.

The conventional small-size motor has several drawbacks such that when the commutator rotates with sliding on the brushes, sliding parts of the brushes unavoidably vibrate to an unacceptable extent, which results in abnormal welding of contact surfaces of the sliding parts of the brushes contacting with the commutator segments, and that spark often generates a black material, which is a mixture of carbon and worn powder formed between the brushes and the commutator segment and induces and worsens abnormal phenomena.

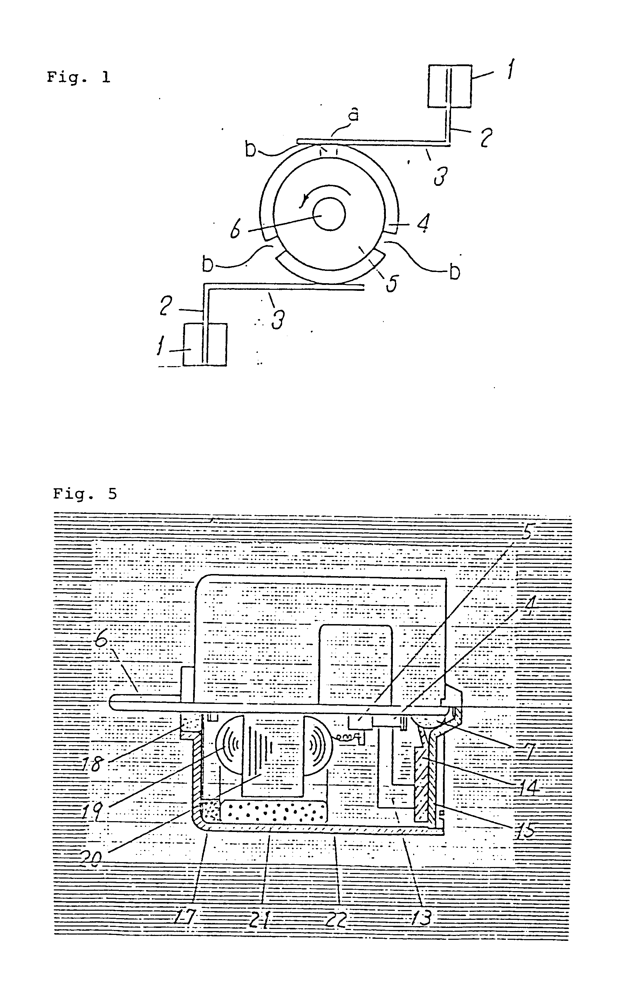

In one type of the small-size motor, the sliding part of the brush, which is slidably engaged with the commutator segment, is integrally molded with a brush base supported by a supporting member provided on, for example, a cover of a motor case. A contacting state between the brushes and the commutator segments of such the motor is shown in Fig.1.

In Fig. 1, bent sliding parts 3,3 of brushes are mounted on respective brush bases 2,2 supported by respective brush supporting means 1,1. The brush bases and the sliding parts of the brushes are inherently resilient so that they are pressed against and in contact with commutator segments 4. The pressure to be exerted by the brushes are adjusted by selecting the angle between the brush base 2 and the sliding part of the brush 3. The commutator segment 4 is fixed on a revolving shaft 6 of the motor via a commutator base 5 and rotates in accordance with the rotation of the motor shaft.

During commutation and on make and break of the contact, spark is generated between the commutator segment 4 and the sliding part of the brush 3 and undesirably causes electric noise, and abrasion or welding of the commutator segment 4 and/or the sliding part of the brush 3.

For instance, when the welding occurs at a part A of the brush where the contact with the commutator begins and ends, the welded material scratches and damages the surface of the commutator segment 4, and the thus abrased chips are trapped in gap B between the adjacent commutator segments to form of circuits between them. This results in unstable rotation of the motor. The rough surface of the commutator segment induces vibration of the brushes, enhances the spark generation and/or causes abnormal abrasion of the brushes, and further induces noise and/or dislocation of the commutation point. These result in the deterioration of the performance of the motor.

The spark is most frequently generated at the part A of the sliding part of the brush 3 with which the commutator segment 4 contacts. Needless to say, the mechanical abrasion due to other causes than the spark is generated on the commutator segment 4 and the sliding part of the brush 3.

The sliding part of the brush is commonly made of the noble metal alloys or the sintered carbon as described in the above, while the commutator segment is made of the noble metal alloy (e.g., AgCu, AgCd, AgCuCd, AgCuTi, etc.). In case of the noble metal brush, the sliding part of the brush and the commutator segment are made of substantially the same material having high surface energy as follows (calculated from the sublimation heats at 20° C. cf. Chem. Rev.,52, 417 (1953)):

Ag (100) = 1,920 dyne/cm
Ag (111) = 1,650 dyne/cm
Au (100) = 2,516 dyne/cm
Au (111) = 2,175 dyne/cm
Cu (100) = 2,892 dyne/cm

Cu (111) = 2,499 dyne/cm
Pt (100) = 3,747 dyne/cm
Pt (111) = 3,248 dyne/cm.

Thus, the sliding surfaces are disadvantageously scratched. In case of the sintered carbon brush, although it has smaller dynamic resistance than the noble metal alloy, it may scratch the surface of the commutator segment since it contains a small amount of impurities such as $SiO_2$. Further, the noble metal-carbon brush is not desirable to be used in combination with the noble metal commutator segment because of the same reason as in case of the noble metal brush.

Fig. 2A shows a brush not having a mechanical means for preventing spark, namely means for damping vibration. Since the sliding part of such brush vibrates with a large amplitude, it frequently induces spark and consequently abrasion and welding of the commutator segment.

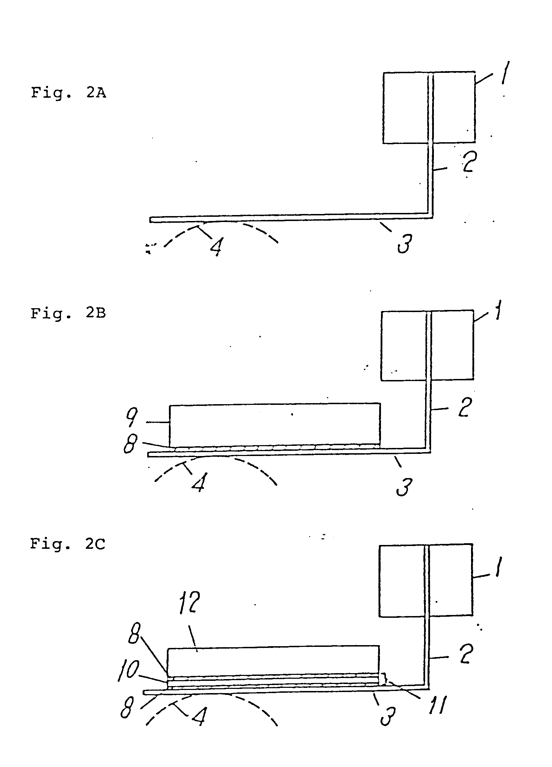

Fig. 2B shows a brush having means for damping vibration comprising a rubber vibration insulator 8 adhered on the sliding part of the brush 3 with an adhesive 9. Although the rubber vibration insulator absorbs vibration and prevents generation of the spark at a room temperature, adhesivity of the adhesive is deteriorated at a temperature around 60°C so that bonding between the insulator 9 and the sliding part 3 is weakened. As the result, the vibration insulating property is degraded and therefore spark is vigorously generated. This means that a motor comprising such brush does not have a long duration of life.

Fig. 2C also shows a brush having another means for damping vibration comprising a vibration insulating sheet 12 adhered on the sliding part of the brush 3 with an adhesive sheet 11 comprising a substrate 10 both surfaces of which are coated with an adhesive 8. The sheet 12 prevents deterioration of the adhesivity of the adhesive at a high temperature to some extent. However, it does not satisfy requirements for a long duration of life and high quality at a high temperature. The small-size motor is often used in a temperature range between -10°C and +60°C.

Some literatures and experiments have been analyzed conditions under which the welding between the sliding part of the brush and the commutator segment or abnormal abrasion or circuit is caused. In such conditions, an atmosphere surrounding the sliding part of the brush contains, or the commutator segment itself adsorbs an unsaturated cyclic hydrocarbon (e.g., styrene, toluene, etc.), which will form the black material (probably a decomposed material or a carbon-like polymer produced by a mechanochmical reaction or their mixture with powder abrased from the brush and the commutator segment).

The amount of the black material increases when the unsaturated cyclic hydrocarbon is burnt by spark between the sliding part of the brush and the commutator segment. Probably because of incomplete combustion and/or its chemical structure, the material has dense bonding structure to form a hard carbonaceous mass.

It has been found that, although a hydrocarbon other than the unsaturated cyclic hydrocarbon forms a black material, the material is not hard but soft and does not induce the above described abnormal conditions of the motor. According to Examples described below, following results were obtained:

1. At a higher temperature and lower humidity, the commutator segment is more often abnormally abrased.

2. When the commutator segment adsorbs as little as 10 $\mu$g of the unsaturated cyclic hydrocarbon, the malfunction of the commutator segment is decreased and the duration of life of the motor is prolonged, but the wow and flutter are worse.

Summary of the Invention

One object of the present invention is to provide a small-size motor in which slidability between the brushes and the commutator segment is improved so that wear and welding of them are decreased and thus the abrasion or mechanical loss of them is prevented, which results in a long duration of life of the motor.

Another object of the invention is to provide a small-size motor which improves characteristics such as wow and flutter and a duration of life of a tape recorder and the like in that the motor is installed.

These and other objects are achieved according to the present invention by a small-size motor according to claim 1. Preferred embodiments of the invention are subject of the subclaims.

Brief Explanation of the Drawings

Fig. 1 shows a contact state of brushes and commutator segments of a small-size motor,
Figs. 2A, 2B and 2C show three embodiments of brushes used in the small-size motor,
Figs. 3 and 4 show structures of preferred embodiments of the small-size motor of the invention,

Fig. 5 is a cross section of one embodiment of the small-size motor of the invention,

Fig. 6-1 to 6-21 are graphs of commutating waves of small-size motors used in Examples.

Detailed Description of the Invention

The organic compound is impregnated in a suitable material such as felt, a synthetic or natural plastic or rubber open cell foam and installed in the motor interior. Alternatively or additonally, it can be directly applied to an element of the motor such as the brush or the sliding part of the brush for simplicity of the motor construction.

The organic compound is vaporized at an ambient temperature so as to provide an atmosphere of its vapor in the motor interior. The evaporated compound is adsorbed by the surfaces of the brush and/or the commutator segment to form a mono- or poly-molecular layer, so that the lubricity of the surface is improved and the abrasion of the surfaces is significantly reduced.

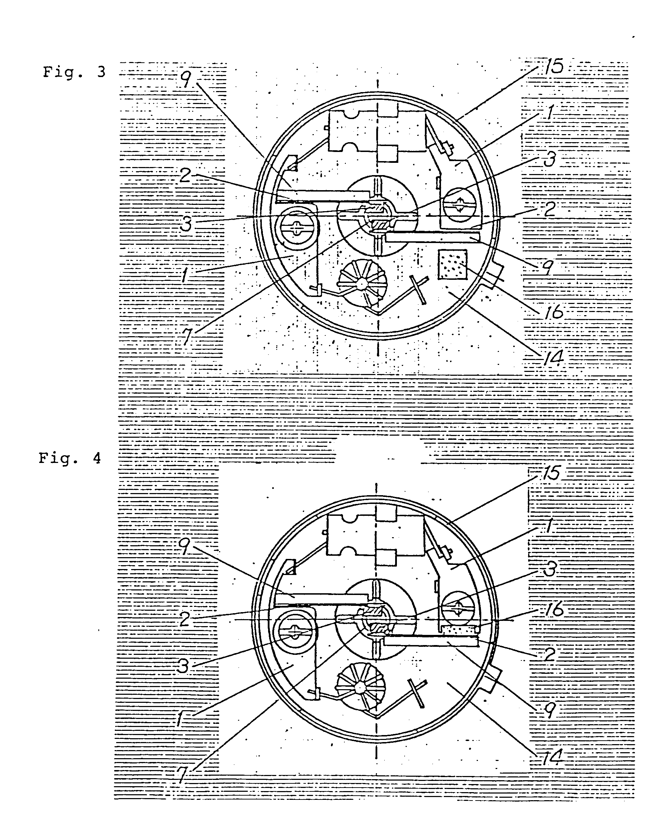

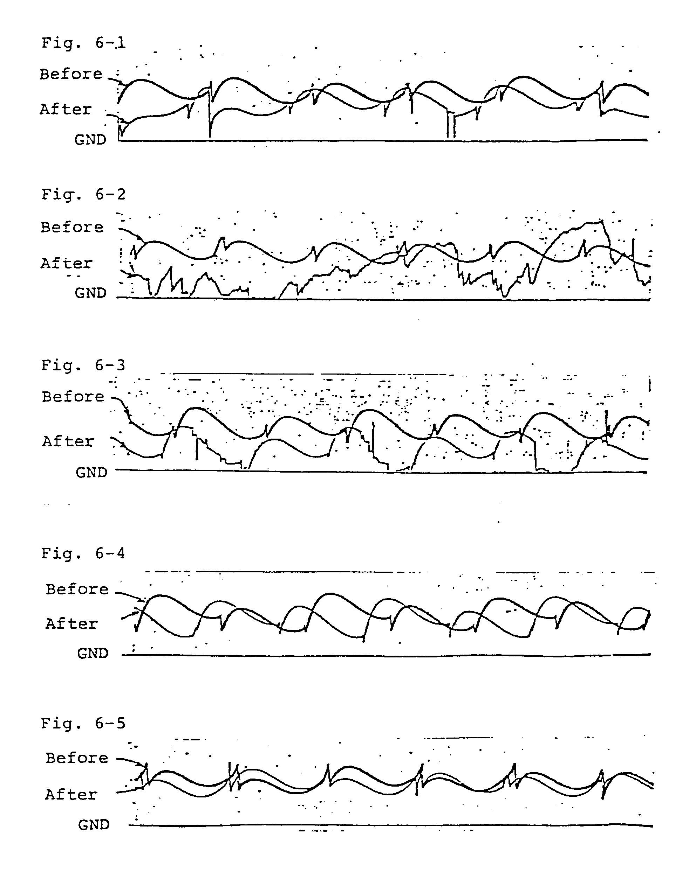

Figs. 3 and 4 each shows one embodiment of the small-size motor of the invention. In these figures, the same numerals stand for the same elements in Fig. 1, and numerals 14, 15 and 16 stand for a bracket for supporting the brushes and the like, a lower motor case and a sheet felt impregnated with the organic compound according to the present invention. An evaporation rate of the organic compound can be controlled by selecting thickness of the felt fiber and/or apparent density of the felt. In the embodiment shown in Fig. 3, the impregnated felt 16 is placed on the bracket 14 near the sliding part of the brush 3, and in Fig. 4, on the brush base 2. Alternatively, the felt 16 may be placed on the sliding part of the brush 3. The place where the organic compound-impregnated material is placed or the element to which the organic compound is impregnated is not limited in so far as the place or element does not interfere or deteriorate the operation of the motor. For example, the organic compound may be blended in the plastic bracket 14 or the plastic commutator base 5, impregnated in magnet wire 19 (see Fig. 5) blended in oil in an upper metal 18 and/or lower metal 7 (see Fig. 5), placed in a gap between a magnet 21 and a motor case 22 (see Fig. 5), blended in the insulator rubber 9 or the adhesive 8. The organic compound may be contained in a gas permeable film or case made of, for example, polyethylene and placed in the small-size motor.

The organic compound used according to the present invention does not form such hard black material as formed from the unsaturated cyclic hydrocarbon and reduces the sliding resistance between the sliding part of the brush and the commutator segment.

At a high temperature and low humidity at which the abnormal conditions often occur in the motor, the motor case is provided with an atmosphere containing the organic compound. Since the organic material used according to the present invention has at least one polar group and is strongly adsorbed on a metal surface by van der Waals binding, its absorption on the metal surface is stable.

The organic compound has preferably a boiling or sublimation point of 40 to 350$^\circ$C, particularly 100 to 300$^\circ$C under atmospheric pressure. When the boiling or sublimation point is too low, the compound is too quickly evaporated and its effect does not last long. When the boiling point is too high, it is hardly evaporated and the motor case is not quickly filled with the atmosphere containing the compound vapor.

Specific examples of the organic compound used according to the present invention are listed below together with a boiling point under 1 atm. unless otherwise indicated:

Monohydric alcohols

n-propanol (97.2$^\circ$C), isopropanol (81.5-83.0$^\circ$C), isobutanol (106-109$^\circ$C), isoamyl alcohol (128-132$^\circ$C), cyclohexanol (160-162.4$^\circ$C), 2,4-dimethyl-3-pentanol (138.4$^\circ$C), 3-methyl-3-pentanol (122.4$^\circ$C), 3-ethyl-3-pentanol (143.1$^\circ$C), diacetone alcohol (167.4$^\circ$C), n-octanol (193-196.0$^\circ$C), 2-ethylhexanol (183.5$^\circ$C), tetrahydrofurfuryl alcohol (177-178.0$^\circ$C/743 mmHg), 1,3-dimethoxy-2-propanol (169.0$^\circ$C), 1-methyl-1-cyclohexanol (168.0$^\circ$C), 7-menthanol (236.0$^\circ$C), isopropylbenzyl alcohol (246.0$^\circ$C), isobutylcarbinol (176-184$^\circ$C), benzyl alcohol (205.4$^\circ$C).

Polyhydric alcohols

propylene glycol (187$^\circ$C), ethylene glycol (197$^\circ$C), 1,3-butanediol (205-210$^\circ$C), 2,3-butanediol (182$^\circ$C), 1,4-butanediol (228$^\circ$C), 4-methyl-1,2-prpanediol (182$^\circ$C), 2-methyl-2,3-butanediol (177.5$^\circ$C/750 mmHg), 1,5-pentanediol (242.5$^\circ$C), 1,6-hexanediol (134$^\circ$C/10 mmHg), 2,5-hexanediol (218$^\circ$C), diethylene glycol (250$^\circ$C), 2-methyl-2,4-pentanediol (197.4$^\circ$C), 2-ethyl-1,3-hexanediol (240-250$^\circ$C), dipropylene glycol (215-245$^\circ$C), glycerol (290$^\circ$C).

## Ethers

n-butyl ether (143°C), isoamyl ether (173.2°C).

## Cyclic ethers

1,4-dioxane (101.4°C), 1,3-dioxane (106°C).

## Esters

dimethyl succinate (195°C), ethyl octanoate (208°C), diethyl fumarate (214°C), diethyl decanoate (242°C), diethyl adipate (245°C), methyl tartrate (280°C), dietyl tartrate (288°C).

## Ketones

cyclopentanone (130.7°C), 2-octanone (174°C), 2-nonanone (195°C), isophorone (215.2°C), 2-undecanone (229°C).

## Ether alcohols

ethylene glycol monoethyl ether (134.8°C), ethylene glycol monobutyl ether (167-173°C), ethylene glycol dibutyl ether (203.6°C), ethylene glycol monohexyl ether (208.1°C), 1,3-dimethoxy-2-propanol (169°C), diethylene glycol monomethyl ether (194.2°C), diethylene glycol monoethyl ether (195°C), diethylene glycol monobutyl ether (230°C), tripropylene glycol monomethyl ether (242.5°C), mono-(polyoxyalkylene)ether of $C_6$-$C_{24}$ alkane- or alkene-diol such as an adduct of hexylene glycol and 1 mole of ethylene oxide or propylene oxide (Adduct 1 or 2), an adduct of hexylene glycol and 2 moles of ethylene oxide or propylene oxide (Adduct 3 or 4), an adduct of hexylene glycol and 4 mole of propylene oxide (Adduct 5) and an adduct of hexylene glycol and 2 moles of ethylene oxide which is further added with 1 mole of propylene oxide (Adduct 6) having properties as follows:

| | Water absorbance[1] (%) | Thermogravimetric analysis[2] | |
| --- | --- | --- | --- |
| | | Half value Temp. (°C) | Final temp. (°C) |
| Adduct 1 | 8 | 164 | 215 |
| Adduct 2 | 7.5 | 175 | 205 |
| Adduct 3 | 20 | 185 | 220 |
| Adduct 4 | 10 | 187 | 216 |
| Adduct 5 | 8 | 200 | 225 |
| Adduct 6 | 13 | 207 | 227 |

Note: 1) Measured at 40°C and 90 %RH under 760 mmHg.
2) 15-20 mg of the compound is analyzed at a temperature raising rate of 5°C/min. with an air flow rate of 50-60 ml/min.

These adducts may contain a small amount of diether used as a raw material or other unreacted compounds.

## Ester alcohols

ethyl lactate (154°C), ethyl glycolate (160°C), 2-hydroxylethyl acetate (188°C), diethyl L-maleate (253°C).

## Aminoalcohols

diethylethanolamine (163°C), dibutylethanolamine (199°C).

## Carboxylic acids

pivalic acid (164°C), isocrotonic acid (169°C), isovaleric acid (177°C), adipic acid (205.5°C), hexanoic acid (205.8°C), n-octanoic acid (239°C), crotonic acid (189°C).

Amides

n-ethylacetoamide (205°C).

Primary, secondary and tertiary alcohols

2-octaneamine (163-164°C), octylamine (188°C), hexylamine (130°C/762 mmHg), 1,6-hexanediamine (81.5°C/10 mmHg), dibutylamine (160°C), dicyclohexylammonium nitrite (255.8°C), tripropylamine (157°C), tributylamine (212°C), 3-methyl-2-oxazolidinone (87-90°C/1 mmHg).

Imidazoles and Imidazolines

2-ethyl-4-methylimidazole (melting point, 44-55°C), 2-ethyl-4-methylimidazoline (111°C/15 mmHg), 2-ethylimidazoline (110°C/15 mmHg), 2,4-dimethylimidazoline (108°C/15 mmHg), 1,2,3-benzotriazole (melting point,93°C).

Oxazolidinones

3-methyl-2-oxazolidinone (87-90°C/1 mmHg).

Monocyclic oxyterpenes

$\gamma$-terpineol (114-115°C), $\beta$-terpineol (209-210°C/752 mmHg), $\alpha$-terpineol (219-221°C), terpinen-4-ol (209-212°C), maltol (sublimation at 93°C), $\ell$-menthol (sublimation at 216.5°C), d-camphor (sublimation at 209°C).

Among these organic compounds, the poly- and mono-hydric alcohols and the ether alcohols are preferred.

The present invention will be hereinafter explained further in detail by following Examples.

Examples 1-21

In Examples, used was a small-size DC motor of Fig. 5 having an outer diameter of 30 mm, a height of 25 mm and normal power of 0.1 W and comprising brushes made of sintered AgC and commutators made of phosphor bronze.

The motor contained a sheet of polyester felt 17 which had been washed and defatted with polyfluoroethylene and impregnated with each organic compound.

In each Example, following organic compound was used and the motor was operated on 4.2 V at 25 mA. The maximum period of time in which the motor was normally operated is shown in following Table 1. However, the operation was terminated at 1,500 hours.

EP 0 209 617 B1

Table 1

| Example No. | Organic compound | Operation time |
|---|---|---|
| 1 (comp.) | No organic compound | 300 hours |
| 2 (comp.) | Styrene | 100 hours |
| 3 (comp.) | Toluene | 300 hours |
| 4 | Benzyl alcohol | 1,500 hours |
| 5 | 2-Methyl-2,4-pentanediol | 1,500 hours |
| 6 | Isoamyl ether | 1,500 hours |
| 7 | 1,3-Dioxane | 1,500 hours |
| 8 | 2-Nonanone | 1,500 hours |
| 9 | 2-Methyl-2,4-pentanediol/ 1 mole of propylene oxide | 1,500 hours |
| 10 | 2-Hydroxyethyl acetate | 1,500 hours |
| 11 | Diethyl fumarate | 1,500 hours |
| 12 | Dibutylethanolamine | 1,500 hours |
| 13 | Hexanoic acid | 1,500 hours |
| 14 | n-Ethylacetoamide | 1,500 hours |
| 15 | Octylamine | 1,500 hours |
| 16 | Dibutylamine | 1,500 hours |
| 17 | Tributylamine | 1,500 hours |
| 18 | 2-Ethyl-4-methylimidazole | 1,500 hours |
| 19 | $\alpha$-Terpineol | 1,500 hours |
| 20 | 2-Methyl-2,4-pentanediol containing 50 % of styrene | 1,500 hours |
| 21 | 3-Methyl-2-oxazolidinone | 1,500 hours |

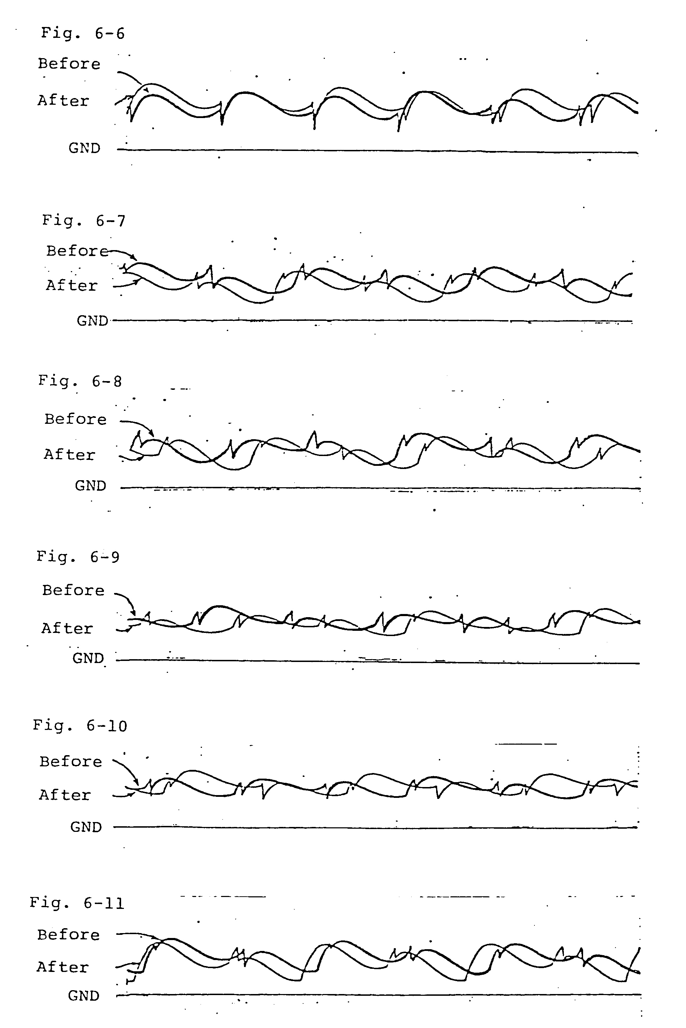

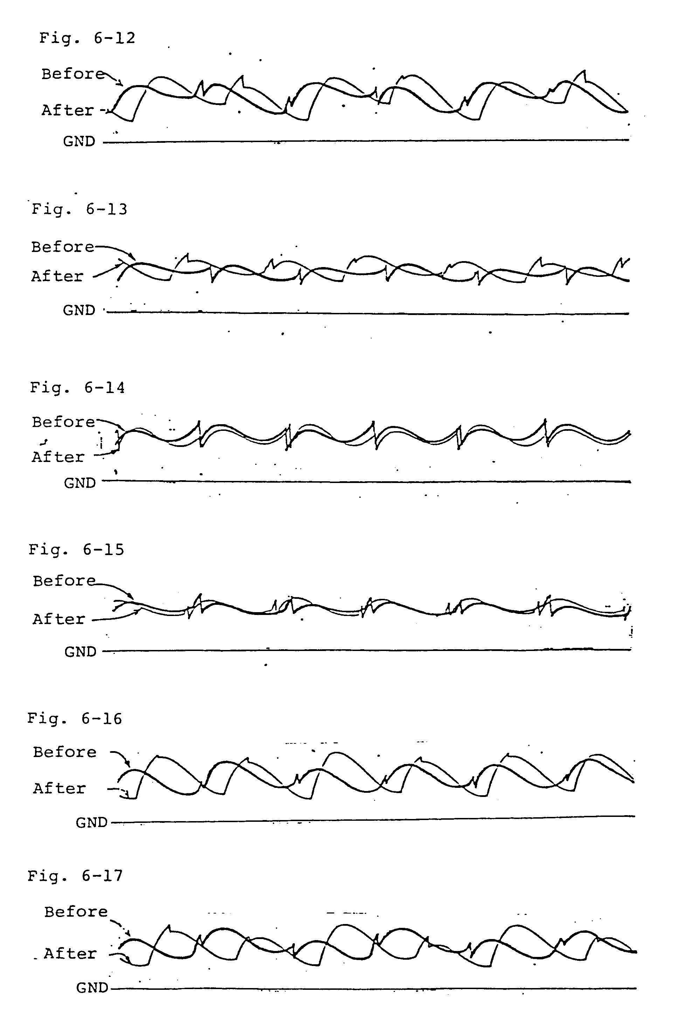

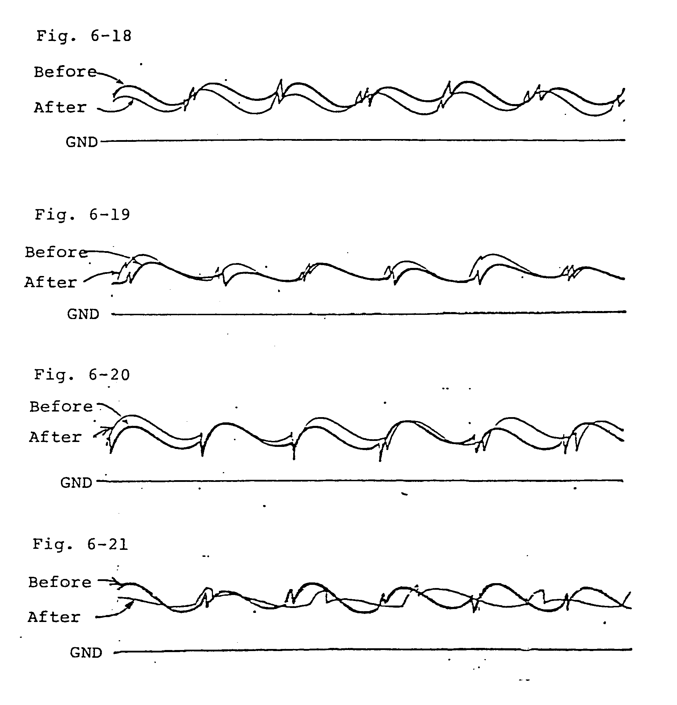

A commutating wave properly reflects the abnormality of the motor. An abnormal wave indicates the abnormal operation of the motor such as unstable revolution, increase of demand power, failure of starting and abnormal revolution. The abnormal wave means that the noise is added on the normal wave or the abnormal part of the wave falls to the ground (GND) level (current = 0) as seen in Figs. 6-1 to 6-3.

The commutating waves before and after operation are shown in Figs. 6-1 to 6-21, in which bold and thin curves represent waves before and after operation, respectively.

As understood from these waves, the motors containing the organic compounds used according to the present invention are stably operated after 1,500 hours while the conventional motors containing no organic compound or the unsaturated cyclic compound cannot be stably operated only after 100 or 300 hours.

A motor having the same structure as that of Fig. 5, normal power of 0.04 W and comprising brushes cladded with AgPd and commutator made of a cladding material of AuAg and AdCd was operated on 12 V at 100 mA at a temperature of -10°C and RH of 20-30 %. The abrased amount of the brush, wow and flutter measured according to JIS C 5551, initial no-load current and initial no-load noise are shown in following Table 2.

Table 2

| Example No. | Abrased amount of brush (μm) (after 1,000 hrs) | Wow and flutter (WTD) (after 300 hrs) | Initial no-load current (mA) | Initial no-load noise (dB$_A$) |
|---|---|---|---|---|
| 1 | 25 | 0.1 | 30 | 28 |
| 2 | 2 | 0.33 | 28 | 27 |
| 3 | 3 | 0.25 | 28 | 27 |
| 4 | 15 | 0.075 | 28 | 27.5 |
| 5 | 5 | 0.07 | 27 | 26 |
| 6 | 8 | 0.09 | 28 | 26 |
| 7 | 10 | 0.1 | 27 | 28 |
| 8 | 7.5 | 0.08 | 27 | 26 |
| 9 | 8 | 0.07 | 28 | 27 |
| 10 | 7 | 0.08 | 28 | 27 |
| 11 | 7 | 0.07 | 29 | 28 |
| 12 | 5 | 0.095 | 29 | 27 |
| 13 | 6 | 0.08 | 28 | 26 |
| 14 | 6 | 0.08 | 27 | 27 |
| 15 | 7.5 | 0.085 | 28 | 27 |
| 16 | 10 | 0.07 | 28 | 27 |
| 17 | 9 | 0.075 | 28 | 28 |
| 18 | 8.5 | 0.08 | 29 | 27 |
| 19 | 10 | 0.07 | 28 | 27 |
| 20 | 10 | 0.088 | 27 | 26 |
| 21 | 8 | 0.09 | 27 | 26 |

According to the present invention, the organic compound is adsorbed on the surface of the brushes and the commutator segments and prevents the abrasion and welding of the sliding surfaces of them.

Even if the motor interior contains the vapor of the unsaturated cyclic compound such as styrene and toluene, the sliding surfaces of the brushes and the commutator segments are protected by the organic compound used according to the present invention so that the formation of the hard black material is prevented. Further, the imperfect contact between the brush and the commutator segment is prevented so that the electric noise is decreased and the motor is stably operated. This results in decrease of wow and flutter.

When the small-size motor with operating voltage of 1-30 V and operating current of 100 mA is operated in an atmosphere containing the vapor of the organic compound used according to the present invention, the current is decrease by 5-10 % since the organic compound has a lubricating property.

In addition, the organic compound adsorbed on the surface of the brushes and the commutator segments have a damping effect to prevent vibration of the brushes caused by the sliding between the brushes and the commutator segments and thus decrease the mechanical noise by 1-10 %.

**Claims**

1. A small-size motor of a type comprising brushes and a commutator slidably engaged with the brushes, as used in tape recorders, video tape recorders and the like, a vapourized organic compound being provided in the motor interior,

characterized in that the motor interior is filled with an atmosphere containing a vapour of at least one organic compound selected from the group consisting of mono- or polyhydric alcohols, ethers, cyclic ethers, ketones, ether alcohols, ester alcohols, aminoalcohols, carboxylic acids, amides, primary, secondary and tertiary amines, imidazoles, imidazolines and monocyclic oxyterpenes, the organic compound having a boiling or sublimation point between about 40 and 350° C.

2. A small-size motor according to claim 1, wherein the organic compound is a polyhydric alcohol.

3. A small-size motor according to claim 1, whereing the organic compound is a monohydric alcohol.

4. A small-size motor according to claim 1, wherein the organic compound is an ether alcohol.

5. A small-size motor according to claim 1, wherein the organic compound is 3-methyl-2-oxazolidinone.

6. A small-size motor according to claim 1, wherein the organic compound is impregnated in a sheet of felt or a synthetic or natural plastic or rubber open cell foam and placed in the motor.

7. A small-size motor according to claim 1, wherein the organic compound is impregnated in magnet of the motor.

8. A small-size motor according to claim 1, wherein the organic compound is blended in a plastic bracket of the motor.

9. A small-size motor according to claim 1, wherein the organic compound is blended in a plastic commutator base of the motor.

10. A small-size motor according to claim 1, wherein the organic compound is impregnated in magnet wire of the motor.

11. A small-size motor according to claim 1, wherein the organic compound is blended in an upper and lower metal (18, 7).

12. A small-size motor according to claim 1, wherein the organic compound is applied in a gap between the magnet and the motor case.

13. A small-size motor according to claim 1, wherein the organic compound is blended in a rubber vibration insulator.

14. A small-size motor according to claim 1, wherein the organic compound is blended in an adhesive.

15. A samll-size motor according to claim 1, wherein the organic compound is contained in a gas permeable film and placed in the motor.

16. A small-size motor according to claim 15, wherein the gas permeable film is made of polyethylene.

**Revendications**

1. Un moteur de petite dimension du type comprenant des balais et un collecteur engagé à glissement avec les balais, comme utilisé dans les appareils enregistreurs à bande, les appareils enregistreurs vidéo à bande et analogues, un composé organique vaporisé étant prévu dans l'intérieur du moteur,
   caractérisé en ce que l'intérieur du moteur est rempli d'une atmosphère contenant la vapeur d'au moins un composé organique choisi dans le groupe comprenant les suivants : alcools mono- ou polyhydriques, éthers, éthers cycliques, cétones, éthers alcools, esters alcools, aminoalcools, acides carboxyliques, amides, amines primaires, secondaires et tertaires, imidazoles, imidazolines et oxyterpènes monocycliques, le composé organique ayant un point d'ébullition ou de sublimation compris entre 40 et 350° C environ.

2. Un moteur de petite dimension selon la revendication 1, selon lequel le composé organique est un

EP 0 209 617 B1

alcool polyhydrique.

3. Un moteur de petite dimension selon la revendication 1, selon lequel le composé organique est un alcool monohydrique

4. Un moteur de petite dimension selon la revendication 1, selon lequel le composé organique est un éther alcool.

5. Un moteur de petite dimension selon la revendication 1, selon lequel le composé organique est la 3-méthyl-2-oxazolidinone.

6. Un moteur de petite dimension selon la revendication 1, selon lequel le composé organique est imprégné dans une feuille de feutre ou dans une mousse à cellules ouvertes en caoutchouc ou en matière plastique synthétique ou naturelle et placé dans le moteur.

7. Un moteur de petite dimension selon la revendication 1, selon lequel le composé organique est imprégné dans l'aimant du moteur.

8. Un moteur de petite dimension selon la revendication 1, selon lequel le composé organique est mélangé dans un support plastique du moteur.

9. Un moteur de petite dimension selon la revendication 1, selon lequel le composé organique est mélangé dans une base en plastique du collecteur du moteur.

10. Un moteur de petite dimension selon la revendication 1, selon lequel le composé organique est imprégné dans le fil d'aimant du moteur.

11. Un moteur de petite dimension selon la revendication 1, selon lequel le composé organique est mélangé dans le métal supérieur et inférieur (18, 7).

12. Un moteur de petite dimension selon la revendication 1, selon lequel le composé organique est appliqué dans un entrefer entre l'aimant et la carcasse du moteur.

13. Un moteur de petite dimension selon la revendication 11, selon lequel le composé organique est mélangé dans un isolant de vibration en caoutchouc.

14. Un moteur de petite dimension selon la revendication 1, selon lequel le composé organique est mélangé dans un adhésif.

15. Un moteur de petite dimension selon la revendication 1, selon lequel le composé organique est contenu dans un film perméable aux gaz et placé dans le moteur.

16. Un moteur de petite dimension selon la revendication 15, selon lequel le film perméable aux gaz est en polyéthylène.

**Patentansprüche**

1. Kleinmotor einer Gattung mit Bürsten und einem Kollektor, der mit den Bürsten in gleitendem Kontakt steht, wie er in Kassettenrekordern, Videorekordern und dergleichen verwendet wird, wobei sich im Motorinneren eine dampfförmige organische Verbindung befindet,
dadurch gekennzeichnet, daß das Motorinnere mit einer Atmosphäre gefüllt ist, die einen Dampf zumindest einer organischen Verbindung, ausgewählt aus der Gruppe bestehend aus ein- oder mehrwertigen Alkoholen, Ethern, cyclischen Ethern, Ketonen, Etheralkoholen, Esteralkoholen, Aminoalkoholen, Carbonsäuren, Amiden, primären, sekundären und tertiären Aminen, Imidazolen, Imidazolinen und monocyclischen Oxyterpenen, enthält, wobei die organische Verbindung einen Siede- oder Sublimationspunkt zwischen ca. 40 und 350 °C hat.

2. Kleinmotor nach Anspruch 1, worin die organische Verbindung ein mehrwertiger Alkohol ist.

10

3. Kleinmotor nach Anspruch 1, worin die organische Verbindung ein einwertiger Alkohol ist.

4. Kleinmotor nach Anspruch 1, worin die organische Verbindung ein Etheralkohol ist.

5. Kleinmotor nach Anspruch 1, worin die organische Verbindung 3-Methyl-2-Oxazolidinon ist.

6. Kleinmotor nach Anspruch 1, worin die organische Verbindung einer Lage Filz oder einem offenzelligen Schaum aus synthetischem oder natürlichem Kunststoff oder Gummi imprägniert und in dem Motor eingesetzt ist.

7. Kleinmotor nach Anspruch 1, worin die organische Verbindung im Magneten des Motors imprägniert ist.

8. Kleinmotor nach Anspruch 1, worin die organische Verbindung in einer Kunststoffstütze des Motors eingemischt ist.

9. Kleinmotor nach Anspruch 1, worin die organische Verbindung in eine Kunststoffkollektorbasis des Motors eingemischt ist.

10. Kleinmotor nach Anspruch 1, worin die organische Verbindung im Magnetdraht des Motors imprägniert ist.

11. Kleinmotor nach Anspruch 1, worin die organische Verbindung in ein oberes und ein unteres Metall (18, 7) eingemischt ist.

12. Kleinmotor nach Anspruch 1, worin die organische Verbindung in eine Lücke zwischen dem Magneten und dem Motorgehäuse eingebracht ist.

13. Kleinmotor nach Anspruch 1, worin die organische Verbindung in einen Vibrationsisolator aus Gummi eingemischt ist.

14. Kleinmotor nach Anspruch 1, worin die organische Verbindung in einen Klebstoff eingemischt ist.

15. Kleinmotor nach Anspruch 1, worin die organische Verbindung in einem gasdurchlässigen Film enthalten und in dem Motor eingesetzt ist.

16. Kleinmotor nach Anspruch 15, worin der gasdurchlässige Film aus Polyethylen besteht.

Fig. 1

Fig. 5

Fig. 2A

Fig. 2B

Fig. 2C

Fig. 3

Fig. 4

14

Fig. 6-1

Before

After

GND

Fig. 6-2

Before

After

GND

Fig. 6-3

Before

After

GND

Fig. 6-4

Before

After

GND

Fig. 6-5

Before

After

GND

Fig. 6-6

Before

After

GND

Fig. 6-7

Before

After

GND

Fig. 6-8

Before

After

GND

Fig. 6-9

Before

After

GND

Fig. 6-10

Before

After

GND

Fig. 6-11

Before

After

GND

Fig. 6-12

Before
After
GND

Fig. 6-13

Before
After
GND

Fig. 6-14

Before
After
GND

Fig. 6-15

Before
After
GND

Fig. 6-16

Before
After
GND

Fig. 6-17

Before
After
GND

Fig. 6-18

Before

After

GND

Fig. 6-19

Before

After

GND

Fig. 6-20

Before

After

GND

Fig. 6-21

Before

After

GND